# EUROPEAN PATENT SPECIFICATION

(11) **EP 3 700 136 B1**
(45) Date of publication and mention of the grant of the patent: **17.08.2022**
(21) Application number: 19158710.4
(22) Date of filing: 22.02.2019
(51) Int. Cl.: H04L 43/12, H04L 43/04

(54) **SYSTEM AND METHOD FOR CONVERTING AND SWITCHING COMMUNICATION DATA**
SYSTEM UND VERFAHREN ZUR UMWANDLUNG UND UMSCHALTUNG VON KOMMUNIKATIONSDATEN
SYSTÈME ET PROCÉDÉ DE CONVERSION ET DE COMMUTATION DE DONNÉES DE COMMUNICATION

(43) Date of publication of application: 26.08.2020
(73) Proprietor: Rohde & Schwarz GmbH & Co. KG, 81671 München (DE)
(72) Inventor: Butler, Jakob Kjaer, 9310 Vodskov (DK); Thellefsen, Torben, 9310 Vodskov (DK); Vestergaard, Thomas Lind Holm, 9380 Vestbjerg (DK); Hansen, Steen Lund, 9200 Aalborg SV (DK); Christensen, Jonathan Fjord, 9000 Aalborg (DK); Christensen, Mikkel Lonnerup, 9260 Gistrup (DK); Norskov, Jakob, 9000 Aalborg (DK)
(74) Representative: Rupp, Christian

(56) References cited:
- WO-A1-2017/071730
- WO-A2-2012/162419
- US-A1- 2008 232 269

## Description

The invention relates to a system and a corresponding method and computer program for converting and switching communication data, especially in a heterogeneous network to allow multipoint data routing for data mediation.

For converting and switching communication data, point to point data routing is commonly used in data mediation. Due to point to point data routing, the said data mediation schemes pose the limitation of non-flexible probing for data acquisition by the monitoring centers. The fix probe connection to monitoring centers further limits data mediators to perform data conversion and switching in a heterogeneous network.

For example, US 2015/0200972 A1 shows data mediation scheme for lawful interception with point to point data routing.

US 2008/232269 A1 discloses a system and method operative to collect and analyze data in a network including a probe layer wherein probes are configured to collect data on the fly. Analyzers collect measurement data from sets of probes and provide storage, data transformation, and analysis. Probe managers manage sets of probes, tracking probe state, updating probe configurations, and collecting configuration command responses and topology information from probes. A System Master may collect topology and probe resource information from the Probe Managers and act as an intermediary between applications and Probe Managers. Configuration data may be sent by a Probe Manager connected to the network. This document shows a signalling analysis farm wherein copies of the signalling data or result frames are sent for analysis. This farm of signalling servers serves multiple probes and the probes serve multiple applications.

WO 2017/071730 A1 discloses a network node that samples data packets and compares the headers of the sampled data packets to a set of one or more packet header patterns which represent protocol types and which are configured. Depending on the comparison, the network node determines a length of a packet header portion to be extracted from the sampled data packet and generates a datagram comprising the extracted packet header portion of the sampled data packet. A management node determines the set of one or more packet header patterns and configures them in the traffic monitoring nodes. The management node is also responsible for collecting and analysing the datagrams.

Accordingly, the object of the invention is to provide a system, a method and a computer program for converting and switching communication data, which allow multipoint data routing for data mediation in a heterogeneous network.

The object is solved by the features of the first independent claim for the system and by the features of the second independent claim for the method. The dependent claims contain further developments and the computer program.

According to a first aspect of the invention, a system for converting and switching communication data is provided according to independent claim 1.

Flexible probing for the monitoring centers is enabled by means of the plurality of delivery functions.

According to a preferred implementation form of said first aspect of the invention, at least one probe module of the plurality of probe modules is adjustable and is connected to the at least one converter module. Advantageously, multipoint data routing is further configured in an adjustable manner.

According to a further preferred implementation form of said first aspect of the invention, the at least one converter module is adjustable and is connected to the at least one output manager. Advantageously, data switching amidst multiple data processing pipelines is configured in an adjustable manner.

According to the invention, the at least one output manager routes the information in the analysis communication protocol corresponding to a specific monitoring center that configures the said analysis communication protocol. Advantageously, independent data transmission is secured throughout the data transmission pipelines with respect to specific analysis communication protocol.

According to a further preferred implementation form of said first aspect of the invention, the system further comprises a plurality of input modules and a plurality of data acquiring units. In this context, the plurality of input modules are connected to the plurality of data acquiring units. Advantageously, the complexity of data acquisition is significantly reduced.

According to a further preferred implementation form of said first aspect of the invention, each data acquiring unit of the plurality of data acquiring units corresponds to a different filtering capability with respect to each other. Advantageously, transmitted data through multiple data processing pipelines can be effectively differentiated corresponding to the capabilities of the acquisition units.

According to a further preferred implementation form of said first aspect of the invention, the communication stream is packet oriented. Advantageously, data processing complexity is significantly reduced.

According to a further preferred implementation form of said first aspect of the invention, the plurality of monitoring centers analyze the information of the analysis communication protocol. Advantageously, data processing complexity is further reduced.

According to a further preferred implementation form of said first aspect of the invention, at least a part of the information is private and is protected by privacy protection. Advantageously, data transmission reliability is significantly increased.

According to a second aspect of the invention, a method for converting and switching communication data is provided as claimed in independent claim 9.

According to the invention, flexible probing for the monitoring centers is enabled by means of the plurality of delivery functions.

According to a preferred implementation form of said second aspect of the invention, the method further comprises the step of connecting at least one probe module of the plurality of probe modules to at least one converter module in an adjustable manner. Advantageously, multipoint data routing is further configured in an adjustable manner.

According to a further preferred implementation form of said second aspect of the invention, the method further comprises the step of connecting at least one converter module to at least one output manager in an adjustable manner. Advantageously, data switching amidst multiple data processing pipelines is configured in an adjustable manner.

According to the invention, by comprising the step of routing the information in the analysis communication protocol corresponding to a specific monitoring center of the plurality of monitoring centers that configures the said analysis communication protocol, independent data transmission is secured throughout the pipelines with respect to specific analysis communication protocol.

In the drawings:
- Fig. 1: shows a system 1a according to the first aspect of the invention,
- Fig. 2: shows a system 1b according to the first aspect of the invention,
- Fig. 3: shows a system 1c according to the first aspect of the invention, and
- Fig. 4: shows a flow chart of a method according to the second aspect of the invention,

Reference will now be made in detail to which are illustrated in the accompanying drawings.

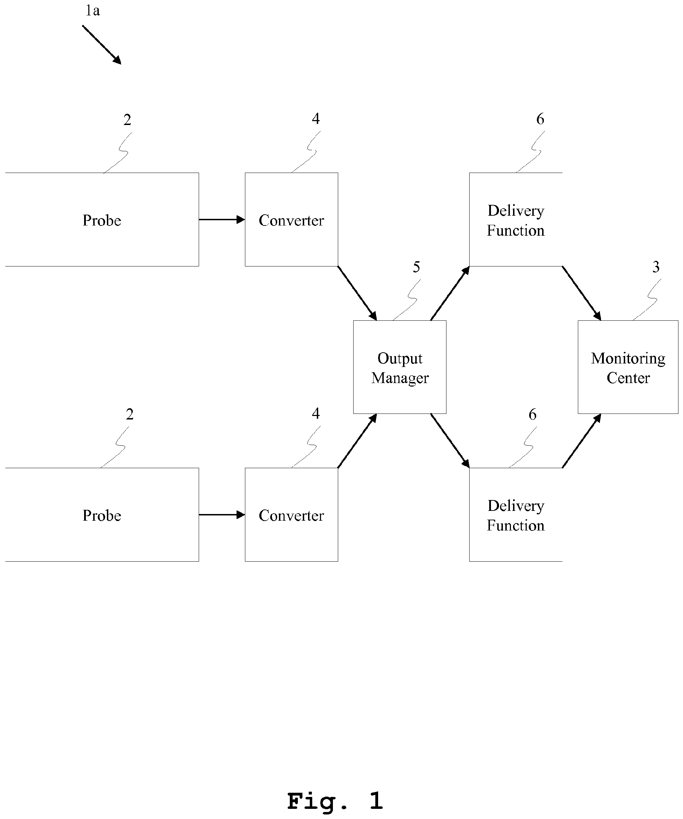

In Fig. 1, a system 1a according to the first aspect of the invention is illustrated. The system 1a comprises a plurality of probe modules 2, each of which is connected to a corresponding converter module 4 and the converter modules 4 are further connected to a output manager 5. Additionally, the system 1a comprises a plurality of delivery functions 6 that are controlled by the output manager 5 and are further connected to a monitoring center 3. In this context, the probe modules 2 intercept and acquire information about communication streams and send the received information to corresponding converter module 4. The converter modules 4 process and convert data from an input format to a desired output format by transforming the protocol of the respective communication stream to an analysis communication protocol.

At this point, the output manager 5 routes the information in the analysis communication protocol by means of the delivery functions 6 to the monitoring center 3 for further analysis, which results in multipoint data routing. It is particularly advantageous that multiple data transmission path can be provided by including one or more probe modules 2 and converter modules 4 but only one output manager 5. Alternatively, both probe modules 2 and converter modules 4 may be part of a single transmission path. It is further advantageous that the transmitted data can be automatically copied and coalesced when necessary within the data processing pipelines.

In addition, the monitoring center 3 is principally responsible for setting up the analysis communication protocol. In this context, the output manager 5 routes the information in the analysis communication protocol corresponding to a specific monitoring center 3 that configures the said analysis communication protocol. In this manner, a particular output manager 5 represents a particular monitoring center 3 and allows only acquisition instructions from that particular monitoring center 3 to be used on the data transmission paths connected to the said output manager 5. As a consequence of this, secured data transmission is established while multiple data transmission paths are connected to a output manager 5.

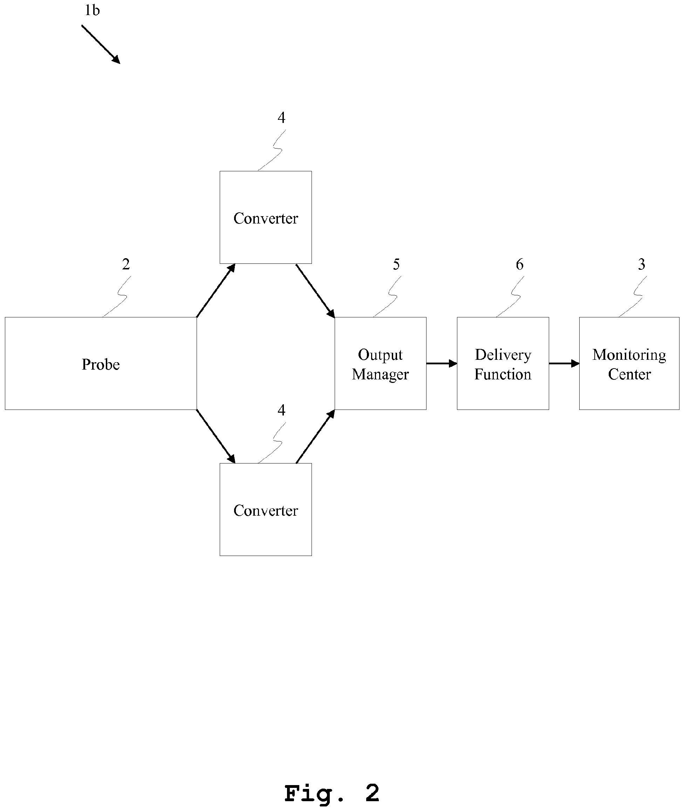

In Fig. 2, a system 1b according to the first aspect of the invention is illustrated. Herein, the system 1b now comprises only one probe module 2 that is connected to multiple converter modules 4. It is to be noted that the probe module 2 and at least one converter module 4 of the multiple converter modules 4 are adjustable and are configured to perform data switching as per the requirements of output manager 5 corresponding to the acquisition instructions from the monitoring center 3.

In this context, the probe module 2 acquires information about communication streams and sends the received information to one of the converter modules 4. Alternatively, the probe module 2 sends the received information to both converter modules 4, for instance by way of packet switching. As a result, it is particularly advantageous if the communication stream is packet oriented. From the converter modules 4, data is sent to the output manager 5, for instance by way of packet switching, where the output manager 5 controls a delivery function 6 which sends the data to the monitoring center 3 for further analysis of the acquired information.

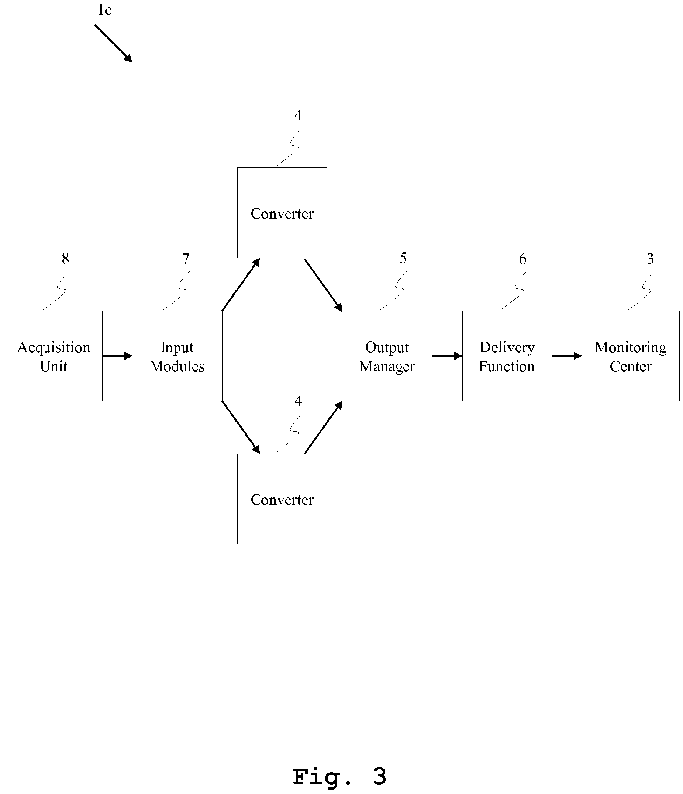

In Fig. 3, a third system 1c according to the first aspect of the invention is illustrated. The said system 1c differs from the second embodiment 1b according to Fig. 2 in that the system 1c further comprises an input module 7 and a data acquiring unit 8. Although the figure illustrates only one input module 7 and one data acquiring unit 8, a plurality of input modules 7 and a plurality of data acquiring units 8 are feasible to achieve multiple input multiple output data processing pipelines. In this context, each data acquiring unit 8 corresponds to a specific filtering capability and the monitoring center 3 sets up data acquisition instructions based on the specific capability of the acquiring unit 8. The monitoring center 3 sets up data acquisition instructions based on a shared capability of the multiple data processing pipelines, in case a plurality of data acquiring units 8 is implemented. In addition, the specific capabilities of the acquisition units 8 can be advantageously utilized as distinguishing parameters to effectively differentiate acquired information corresponding to each acquisition unit 8.

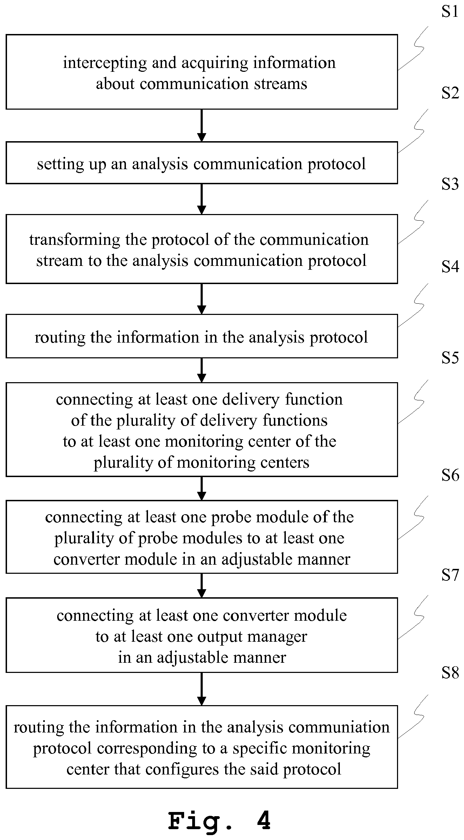

In Fig. 4, a flow chart of the inventive method according to the second aspect of the invention is illustrated. In a first step S1, information about communication streams are intercepted and acquired. In a second step S2, an analysis communication protocol is set up. In a third step S3, the protocol of the communication stream is transformed to the analysis communication protocol. In a fourth step S4, the information is routed in the analysis communication protocol.

Furthermore, in a fifth step S5, at least one delivery function of the plurality of delivery functions is connected to at least one monitoring center of the plurality of monitoring centers.

Moreover, in a sixth step S6, at least one probe of the plurality of probe modules is connected to at least one converter module in an adjustable manner. In a seventh step S7, at least one converter module is connected to at least one output manager in an adjustable manner.

Finally, in an eighth step S8, the information is routed in the analysis communication protocol corresponding to a specific monitoring center that configures the said protocol.

The scope of the invention should be defined in accordance with the claims as appended.

## Claims

1. A system (1a, 1b, 1c) for converting and switching communication data comprising:
- a plurality of probe modules (2), configured to intercept and acquire information about communication streams,
- at least one converter module (4) connected to the plurality of probe modules (2), configured to transform the protocol of the communication stream to an analysis communication protocol,
- at least one output manager (5) connected to the at least one converter module (4),
- a plurality of delivery functions (6), and
- a plurality of monitoring centers (3), wherein one specific monitoring center of said plurality of monitoring centers is configured to set up the analysis communication protocol,
wherein the at least one output manager (5) is connected to the plurality of delivery functions (6),
wherein at least one delivery function of the plurality of delivery functions (6) is connected to at least one monitoring center of the plurality of monitoring centers (3), and
wherein the at least one output manager (5) is configured to route the information in the analysis communication protocol by means of the plurality of delivery functions (6) to the specific monitoring center (3) that configures said analysis communication protocol.

2. The system (1a, 1b, 1c) according to claim 1,
wherein at least one probe module of the plurality of probe modules (2) is adjustable and is connected to the at least one converter module (4).

3. The system (1a, 1b, 1c) according to claim 1 or 2,
wherein the at least one converter module (4) is adjustable and is connected to the at least one output manager (5).

4. The system (1a, 1b, 1c) according to any of claims 1 to 3, further comprises:
- a plurality of input modules (7), and
- a plurality of data acquiring units (8),
wherein the plurality of input modules (7) are connected to the plurality of data acquiring units (8), being feasible to achieve multiple input multiple output data processing pipelines, and
wherein the plurality of monitoring centers (3) are further configured to set up data acquisition instructions based on a shared capability of the plurality of the multiple data processing pipelines.

5. The system (1a, 1b, 1c) according to claim 4,
wherein each data acquiring unit of the plurality of data acquiring units (8) corresponds to a different filtering capability with respect to each other.

6. The system (1a, 1b, 1c) according to any of claims 1 to 5,
wherein the communication stream is packet oriented.

7. The system (1a, 1b, 1c) according to any of claims 1 to 6,
wherein the plurality of monitoring centers (3) analyze the information of the analysis communication protocol.

8. The system (1a, 1b, 1c) according to any of claims 1 to 7,
wherein at least a part of the information is private and is protected by privacy protection.

9. A method for converting and switching communication data in the system of Claim 1, said system comprising a plurality of probe modules (2), at least one converter module (4), at least one output manager (5), a plurality of delivery functions (6) and a plurality of monitoring centers (3), the method comprising the steps of:
- intercepting and acquiring information about communication streams by the plurality of probe modules (2),
- setting up an analysis communication protocol by one specific monitoring center of said plurality of monitoring centers (3),
- transforming the protocol of the communication stream to the analysis communication protocol by the at least one converter module (4),
- routing the information in the analysis communication protocol by the at least one output manager (5) by means of the plurality of delivery functions (6) to the specific monitoring center (3) that configures said analysis communication protocol,
wherein the at least one output manager (5) is connected to the plurality of delivery functions (6).

10. The method according to claim 9,
wherein the method further comprises the step of connecting at least one delivery function of the plurality of delivery functions (6) to at least one monitoring center of the plurality of monitoring centers (3).

11. The method according to claim 9 or 10,
wherein the method further comprises the step of connecting at least one probe module of the plurality of probe modules (2) to at least one converter module (4) in an adjustable manner.

12. The method according to any of claims 9 to 11,
wherein the method further comprises the step of connecting at least one converter module (4) to at least one output manager (5) in an adjustable manner.

13. Computer program with program code means which executes all steps of any of claims 9 to 12 when the computer program runs on a computer or a digital signal processor.

## Patentansprüche

1. System (1a, 1b, 1c) zum Umwandeln und Umschalten von Kommunikationsdaten, das Folgendes umfasst:
- eine Vielzahl von Sondenmodulen (2), die dazu ausgelegt sind, Informationen über Kommunikationsströme abzufangen und zu erfassen,
- mindestens ein Wandlermodul (4), das mit der Vielzahl von Sondenmodulen (2) verbunden und dazu ausgelegt ist, das Protokoll des Kommunikationsstroms zu einem Analysekommunikationsprotokoll umzuformen,
- mindestens einen Ausgabeverwalter (5), der mit dem mindestens einen Wandlermodul (4) verbunden ist,
- eine Vielzahl von Lieferfunktionen (6), und
- eine Vielzahl von Überwachungszentren (3), wobei ein spezifisches Überwachungszentrum der Vielzahl von Überwachungszentren dazu ausgelegt ist, das Analysekommunikationsprotokoll einzurichten,
wobei der mindestens eine Ausgabeverwalter (5) mit der Vielzahl von Lieferfunktionen (6) verbunden ist,
wobei mindestens eine Lieferfunktion der Vielzahl von Lieferfunktionen (6) mit mindestens einem Überwachungszentrum der Vielzahl von Überwachungszentren (3) verbunden ist, und
wobei der mindestens eine Ausgabeverwalter (5) dazu ausgelegt ist, die Informationen im Analysekommunikationsprotokoll mittels der Vielzahl von Lieferfunktionen (6) zum spezifischen Überwachungszentrum (3) zu leiten, das das Analysekommunikationsprotokoll auslegt.

2. System (1a, 1b, 1c) nach Anspruch 1,
wobei mindestens ein Sondenmodul der Vielzahl von Sondenmodulen (2) anpassbar und mit dem mindestens einen Wandlermodul (4) verbunden ist.

3. System (1a, 1b, 1c) nach Anspruch 1 oder 2,
wobei das mindestens eine Wandlermodul (4) anpassbar und mit dem mindestens einen Ausgabeverwalter (5) verbunden ist.

4. System (1a, 1b, 1c) nach einem der Ansprüche 1 bis 3, das ferner Folgendes umfasst:
- eine Vielzahl von Eingabemodulen (7), und
- eine Vielzahl von Datenerfassungseinheiten (8),
wobei die Vielzahl von Eingabemodulen (7) mit der Vielzahl von Datenerfassungseinheiten (8) verbunden sind, die in der Lage sind, Multiple-Input-Multiple-Output-Ausgabedatenverarbeitungspipelines zu realisieren, und
wobei die Vielzahl von Überwachungszentren (3) ferner dazu ausgelegt sind, auf Basis einer gemeinsamen Fähigkeit der Vielzahl der mehreren Datenverarbeitungspipelines Datenerfassungsanweisungen einzurichten.

5. System (1a, 1b, 1c) nach Anspruch 4,
wobei jede Datenerfassungseinheit der Vielzahl von Datenerfassungseinheiten (8) mit Bezug aufeinander einer anderen Filterfähigkeit entspricht.

6. System (1a, 1b, 1c) nach einem der Ansprüche 1 bis 5, wobei der Kommunikationsstrom paketorientiert ist.

7. System (1a, 1b, 1c) nach einem der Ansprüche 1 bis 6, wobei die Vielzahl von Überwachungszentren (3) die Informationen des Analysekommunikationsprotokolls analysieren.

8. System (1a, 1b, 1c) nach einem der Ansprüche 1 bis 7, wobei mindestens ein Teil der Informationen privat und durch Datenschutz geschützt ist.

9. Verfahren zum Umwandeln und Umschalten von Kommunikationsdaten im System von Anspruch 1, wobei das System eine Vielzahl von Sondenmodulen (2), mindestens ein Wandlermodul (4), mindestens einen Ausgabeverwalter (5), eine Vielzahl von Lieferfunktionen (6) und eine Vielzahl von Überwachungszentren (3) umfasst, wobei das Verfahren die folgenden Schritte umfasst:
- Abfangen und Erfassen von Informationen über Kommunikationsströme durch die Vielzahl von Sondenmodulen (2),
- Einrichten eines Analysekommunikationsprotokolls durch ein spezifisches Überwachungszentrum der Vielzahl von Überwachungszentren (3),
- Umformen des Protokolls des Kommunikationsstroms zum Analysekommunikationsprotokoll durch das mindestens eine Wandlermodul (4),
- Leiten der Informationen im Analysekommunikationsprotokoll durch den mindestens einen Ausgabeverwalter (5) mittels der Vielzahl von Lieferfunktionen (6) zum spezifischen Überwachungszentrum (3), das das Analysekommunikationsprotokoll ausgelegt,
wobei der mindestens eine Ausgabeverwalter (5) mit der Vielzahl von Lieferfunktionen (6) verbunden ist.

10. Verfahren nach Anspruch 9,
wobei das Verfahren ferner den Schritt des Verbindens von mindestens einer Lieferfunktion der Vielzahl von Lieferfunktionen (6) mit mindestens einem Überwachungszentrum der Vielzahl von Überwachungszentren (3) umfasst.

11. Verfahren nach Anspruch 9 oder 10,
wobei das Verfahren ferner den Schritt des Verbindens von mindestens einem Sondenmodul der Vielzahl von Sondenmodulen (2) mit mindestens einem Wandlermodul (4) in einer anpassbaren Weise umfasst.

12. Verfahren nach einem der Ansprüche 9 bis 11,
wobei das Verfahren ferner den Schritt des Verbindens von mindestens einem Wandlermodul (4) mit mindestens einem Ausgabeverwalter (5) in einer anpassbaren Weise umfasst.

13. Computerprogramm mit Programmcodemitteln, das alle Schritte von einem der Ansprüche 9 bis 12 ausführt, wenn das Computerprogramm auf einem Computer oder einem digitalen Signalprozessor läuft.

## Revendications

1. Système (1a, 1b, 1c) pour convertir et commuter des données de communication comprenant :
- une pluralité de modules de sonde (2), configurés pour intercepter et acquérir des informations sur les flux de communication,
- au moins un module de convertisseur (4) connecté à la pluralité de modules de sonde (2), configuré pour transformer le protocole du flux de communication en un protocole de communication d'analyse,
- au moins un gestionnaire de sortie (5) connecté à l'au moins un module de convertisseur (4),
- une pluralité de fonctions de distribution (6), et
- une pluralité de centres de surveillance (3), dans lequel un centre de surveillance spécifique de ladite pluralité de centres de surveillance est configuré pour établir le protocole de communication d'analyse,
dans lequel l'au moins un gestionnaire de sortie (5) est connecté à la pluralité de fonctions de distribution (6),
dans lequel au moins une fonction de distribution de la pluralité de fonctions de distribution (6) est connectée à au moins un centre de surveillance de la pluralité de centres de surveillance (3), et
dans lequel l'au moins un gestionnaire de sortie (5) est configuré pour acheminer les informations dans le protocole de communication d'analyse au moyen de la pluralité de fonctions de distribution (6) vers le centre de surveillance spécifique (3) qui configure ledit protocole de communication d'analyse.

2. Système (1a, 1b, 1c) selon la revendication 1,
dans lequel au moins un module de sonde de la pluralité de modules de sonde (2) est réglable et est connecté à l'au moins un module de convertisseur (4).

3. Système (1a, 1b, 1c) selon la revendication 1 ou 2, dans lequel l'au moins un module de convertisseur (4) est réglable et est connecté à l'au moins un gestionnaire de sortie (5).

4. Système (1a, 1b, 1c) selon l'une quelconque des revendications 1 à 3, comprend en outre :
- une pluralité de modules d'entrée (7), et
- une pluralité d'unités d'acquisition de données (8),
dans lequel la pluralité de modules d'entrée (7) sont connectés à la pluralité d'unités d'acquisition de données (8), ce qui permet de réaliser des pipelines de traitement de données entrée multiple sortie multiple, et
dans lequel la pluralité de centres de surveillance (3) sont en outre configurés pour établir des instructions d'acquisition de données sur la base d'une capacité partagée de la pluralité de pipelines de traitement de données multiples.

5. Système (1a, 1b, 1c) selon la revendication 4,
dans lequel chaque unité d'acquisition de données de la pluralité d'unités d'acquisition de données (8) correspond à une capacité différente des autres.

6. Système (1a, 1b, 1c) selon l'une quelconque des revendications 1 à 5, dans lequel le flux de communication est orienté paquets.

7. Système (1a, 1b, 1c) selon l'une quelconque des revendications 1 à 6,
dans lequel la pluralité de centres de surveillance (3) analysent les informations du protocole de communication d'analyse.

8. Système (1a, 1b, 1c) selon l'une quelconque des revendications 1 à 7,
dans lequel au moins une partie des informations est privée et est protégée par une protection de la vie privée.

9. Procédé de conversion et de commutation de données de communication dans le système selon la revendication 1, ledit système comprenant une pluralité de modules de sonde (2), au moins un module de convertisseur (4), au moins un gestionnaire de sortie (5), une pluralité de fonctions de distribution (6) et une pluralité de centres de surveillance (3), le procédé comprenant les étapes consistant à :
- intercepter et acquérir des informations sur les flux de communication par la pluralité de modules de sonde (2),
- établir un protocole de communication d'analyse par un centre de surveillance spécifique de ladite pluralité de centres de surveillance (3),
- transformer le protocole du flux de communication en le protocole de communication d'analyse par l'au moins un module de convertisseur (4),
- acheminer les informations dans le protocole de communication d'analyse par l'au moins un gestionnaire de sortie (5) au moyen de la pluralité de fonctions de distribution (6) vers les centres de surveillance (3) spécifiques qui configurent ledit protocole de communication d'analyse,
dans lequel l'au moins un gestionnaire de sortie (5) est connecté à la pluralité de fonctions de distribution (6).

10. Procédé selon la revendication 9,
dans lequel le procédé comprend en outre l'étape consistant à connecter au moins une fonction de distribution de la pluralité de fonctions de distribution (6) à au moins un centre de surveillance de la pluralité de centres de surveillance (3).

11. Procédé selon la revendication 9 ou 10, dans lequel le procédé comprend en outre l'étape consistant à connecter au moins un module de sonde de la pluralité de modules de sonde (2) à au moins un module de convertisseur (4) d'une manière réglable.

12. Procédé selon l'une quelconque des revendications 9 à 11,
dans lequel le procédé comprend en outre l'étape consistant à connecter au moins un module de convertisseur (4) à au moins un gestionnaire de sortie (5) d'une manière réglable.

13. Programme informatique avec des moyens de code de programme qui exécutent toutes les étapes de l'une quelconque des revendications 9 à 12 lorsque le programme informatique fonctionne sur un ordinateur ou un processeur de signaux numériques.
